# EUROPEAN PATENT SPECIFICATION

(11) **EP 4 493 904 B1**
(45) Date of publication and mention of the grant of the patent: **29.07.2026**
(21) Application number: 23711724.7
(22) Date of filing: 15.03.2023
(51) Int. Cl.: G01N 1/30, G01N 1/28

(54) **METHOD FOR PREPARING A SAMPLE FOR MICROSCOPIC EXAMINATION USING A POROUS MATERIAL BASED ON CHITOSAN, PREPARED SAMPLE AND ITS USE**
VERFAHREN ZUR PRÄPARATION EINER PROBE FÜR DIE MIKROSKOPISCHE UNTERSUCHUNG UNTER VERWENDUNG EINES PORÖSEN MATERIALS AUF CHITOSANBASIS, PRÄPARIERTE PROBE UND DEREN VERWENDUNG
PROCÉDÉ DE PRÉPARATION D'UN ÉCHANTILLON POUR EXAMEN MICROSCOPIQUE À L'AIDE D'UN MATÉRIAU POREUX À BASE DE CHITOSANE, ÉCHANTILLON PRÉPARÉ ET SON UTILISATION

(30) Priority: 16.03.2022 EP 22162464
(43) Date of publication of application: 22.01.2025
(73) Proprietor: VivaScope GmbH, 81829 München (DE)
(72) Inventor: BANCHI, Roberto, 83512 Wasserburg am Inn (DE); CRESCENZI, Anna, 00141 Roma (IT); DI MATTEO, Francesco Maria, 00182 Roma (IT); TAFFON, Chiara, 00183 Roma (IT)
(74) Representative: Schwarz, Claudia
(86) International application number: PCT/EP2023/056553
(87) International publication number: WO 2023/174977

(56) References cited:
- WO-A1-2008/073387
- US-A1- 2019 277 733
- STIGLIANO SERENA ET AL: "Role of fluorescence confocal microscopy for rapid evaluation of EUS fine-needle biopsy sampling in pancreatic solid lesions", GASTROINTESTINAL ENDOSCOPY, ELSEVIER, NL, vol. 94, no. 3, 31 March 2021 (2021-03-31), pages 562, XP086754133, ISSN: 0016-5107, [retrieved on 20210331], DOI: 10.1016/J.GIE.2021.03.029

## Description

The invention is directed to a method for preparing samples for microscopic examination, particularly for the pathological evaluation of fresh biopsy samples using a chitosan-based porous material.

The use of a chitosan-based material for the inclusion of cytologic preparations is described in WO 2018/083616 A1 and also by Bruschini, S. et. al. in the article "CytoMatrix for a reliable and simple characterization of lung cancer stem cells from malignant pleural effusions" in J. Cell Physiol. 2020; 235; 1877-1887. In this article the use of chitosan-based material, named "CytoMatrix", as a support for the characterization of limited amounts of cancer cells, isolated from malignant pleural effusions (MPEs) of patients with non-small-cell lung cancer, is described. The cell samples are loaded on a CytoMatrix^{™} cell block, followed by formalin fixation and paraffin inclusion. The cell block is then cut into 5 µm sections using a microtome and the sections are mounted onto the slides for microscopic evaluation.

Common histopathological workflows include the fixation in formalin for hours, embedding the biopsies in so-called "embedding resins" such as Cryomatrix^{™}, or paraffin, cutting the embedded blocks into sections, mounting of the sections on a microscope slide, followed by staining, e.g. usually hematoxylin-Eosin staining. These steps are time-consuming, labor-intensive, require bulky lab equipment and are generally hard to set-up and synchronize with surgery workflows. In such histopathological workflows the sections may be destroyed and thus wasted (e.g. when cutting the sections) and therefore, the section information for diagnosis is lost.

A novel chitosan-based material is described in WO2018/083616 A1 which is now commercially available under the tradename CytoMatrix^{™} which is useful for the histopathological sample preparation. According to the workflow disclosed in the datasheet of CytoMatrix^{™}, the sample is immersed in formalin for at least 6 to 8 hours, if the biopsy sample is pretreated before loading onto CytoMatrix^{™}, or for at least 12 hours, if the sample is directly applied onto CytoMatrix^{™} (cf. https://cytomatrix.it). This means that the results of the biopsy are only available the day after the biopsy and the medical personal, e.g. the surgeon, only knows the diagnosis results or the success of the biopsy procedure at a much later stage.

It is therefore desirable, particularly for the medical personal and the patients, to get the results from the biopsy shortly after, preferably during the biopsy procedure.

The inventors now found that it is possible to use the chitosan-based porous material described in WO 2018/083616 A1, particularly the material available under the tradename CytoMatrix^{™}, for the preparation of samples for microscopic examination without the time-consuming fixation of biopsy sample through immersion in formalin for several hours.

The invention therefore relates to a novel sample preparation procedure for rapid microscopic evaluation of pathological biopsies, which are evaluated within a short time frame, preferably during the biopsy procedure, which may be a biopsy session or a surgical operation, e.g. the removal of malign (e.g. cancerous or infectious) tissues.

This is advantageous as the patient is still present and the desired next steps (e.g. surgery treatment or re-biopsy) can be decided by medical personal right away, based on the evaluation of the biopsy results, in particular the information provided by the microscopic images.

The new rapid pathological evaluation method according to the invention provides many benefits for the medical personal (e.g. the surgeon, the endoscopist, the operation /hospital staff) as well as the patients in view of costs, potential pain and sufferings for the patients as well as it reduces the working time. As the histopathologist is able to evaluate the biopsy samples immediately and during the biopsy procedure.

The examination of the biopsy sample is not performed on cutout sections but on optical image sections. Optical image sections are the images from thin sections of the biopsy samples. They are taken using appropriate microscopic imaging technologies, such as laser scanning confocal technology. By using optical image sectioning, in contrast to using cutout sections prepared according to conventional histopathological workflows, the biopsies remain intact. In standard histopathology workflows some sample sections are destroyed and wasted during cutting and therefore the section information is lost for diagnosis. Also, optical image sectioning is less time-consuming, less labor-intensive, and does not require bulky lab equipment. Additionally, the biopsy sample preparation and its examination can be synchronized with the surgery workflows.

Moreover, the site for the evaluation of the microscopic data, for example in the form of digital microscopic images, may be on-site or off-site, i.e. in vicinity of the site where the biopsy has been taken, or can be shared in real-time with an outside expert.

The histopathological findings may guide the surgeon through the operation. Based on the findings, the surgeon can make an immediate treatment decision already in the surgery room, if it is necessary. For example, when the biopsy is positive for cancer cells, the surgeon removes the tumor or more tumor margins, so that the patient does not have to undergo the same procedure again and later. Therefore, the instant evaluation of the biopsy sample helps the surgeon to remove all malign tissue and eliminates the possibility of tumor reoccurrence. Or, if the biopsy is negative for cancer cells, the surgeon does not accidentally remove more healthy tissue than necessary. This is beneficial for the patient as negative physiological and psychological side effects of the healthy tissue removal can be avoided and the appearance of a patient (e.g. face or body shape) is not altered too much. Also, the removal of lymph nodes during a cancer surgery can be omitted when no cancer cells are observed in the fine needle aspiration biopsy of the lymph nodes. In breast cancer surgery, the axillary nodes are removed as a standard precautionary method.

In general, if a re-biopsy is needed, for before mentioned reasons or because the biopsy has a bad quality or a bad quantity to make a diagnosis, the medical personal as well as the patient are still present on-site and a re-biopsy can take place immediately. Another advantage of the invention, besides the simplicity of the sample preparation, is the possibility to use a benchtop microscope (such as e.g. VivaScope^{™} 2500) and thus the examination of the biopsy sample can be performed under sterile conditions, i.e. in the operation room or in the sterile operation section of a hospital.

Thus, the invention is directed to a method for preparing a sample for microscopic examination comprising the following steps:
step (i): using a solid or ductile chitosan-based porous material having interconnected pores with sizes between 5 µm and 700 µm and a total porosity (volumetric fraction) between 40% and 90%;
step (ii): adding at least one biopsy sample containing tissue and/or eukaryotic and/or prokaryotic cells and/or eukaryotic cells containing viral particles to the chitosan-based porous material; and
step (iii): adding ethanol and in a concentration of 65% [v/v] to 75% [v/v] in water or aqueous buffer.

In one embodiment the chitosan-based porous material is obtained by arranging a chitosan and/or a lactosylated chitosan solution or a vinyl derivative solution of chitosan, said vinyl derivative being alone or in mixture with a sulfhydryl derivative of chitosan, all compounds having a molecular weight between 50 kDa and 200 kDa and being dissolved in an acid solution of polar inorganic or organic acid, followed by a gelification of said solution to obtain a hydrogel and freeze-drying the resulting hydrogel obtaining the porous material.

In one embodiment the method of the invention additionally comprises a step (iv), namely staining the biopsy sample by adding at least one fluorescent dye, which dye is preferably selected from 2,3-Benzoquinoline-type dyes, Acridine Orange, Acriflavine, Proflavine and Acridine Yellow, Thiazine-type dyes, Toluidine Blue and Methylene Blue, the colors of Masson trichrome stains, Methyl Blue, Aniline Blue, Fast Green FCF, Water Blue, Hematoxylin, Eosin, Ethidium Bromide, Rhodamine123, Syber Green, Acid Fusion, Sirius Red, Col-F, Nile Blue, Nile Red, Oil Red O, Auramine O, Neutral Red, Patent Blue, Fluorescein, Indocyanine green (ICG), Methyl Green, Pyronin Y, and combinations thereof. Among before mentioned dyes, 2,3-Benzoquinoline dyes, particularly Acridine Orange are preferably used. The dye may contain a linker molecule such as an antibody or lectin. If the dye is bound to a linker molecule, then the linker interacts with the cells and/or tissue of the biological sample.

In another embodiment of the invention the chitosan-based porous material is used in the shape of a slab or a block, wherein at least one surface of the slab or the block is capable of receiving the biopsy samples in its entirety as collected through incisional biopsy, stereotactic biopsy, sternal biopsy, chorionic villus biopsy, cone biopsy, endoscopic biopsy, needle biopsy (percutaneous biopsies), fine-needle aspiration biopsy (FNA), fine-needle biopsy (FNB), small-needle biopsy, micro-needle biopsy, core-needle biopsy or cell suspension biopsies.

The shape and the size (breadth, length and height) of the chitosan-based porous material is selected to meet the requirements of the specimen holder of the microscope used for the pathological examination, particularly the optical image sectioning, and to be able to receive as much biopsy sample as possible and, particularly without the need of fragmenting the sample. Using the method according to the invention, the cutting of the chitosan-based porous material into sections, after the sample is mounted onto the support and before the microscopic examination, can be omitted, thus, again, simplifying the sample preparation compared with standard histopathological preparation methods using formalin fixed cutouts for microscopic evaluation.

In an embodiment of the invention the length and/or the breadth, or the diameter of the at least one surface of the slab or the block, which is capable of receiving the biopsy sample is adapted to the type of biopsy samples for which it will be used for, and the size of the sample holder of the microscope used. The appropriate size can easily be determined by a person skilled in the art. For example, if micro-needle biopsies are examined with a microscope of the type VivaScope^{™} 2500 with the method according to the invention, then the length of one side of the slab or block is preferably at least 0.8 cm.

When using confocal microscopy, particularly a microscope of the type VivaScope^{™} 2500, then the size of the block or slab depends on the stiffness of the chitosan-based porous material, and in the context of [embodiment 2] or CytoMatrix^{™}, the size is preferably in the range of from 0.8 cm x 0.8 cm x 0.2 cm to the size of 1.5 cm x 1.5 cm x 0.2 cm, including sizes like 0.8 cm x 1.5 cm (breadth x length). Smaller and larger sizes are possible.

The VivaScope^{™} 2500 microscope uses its laser-scanning confocal technology to provide high quality optical section images at cellular resolutions. It provides optical laser-scanned sections without the time-consuming and labour-intensive microtome sectioning in the conventional standard cyto- or histopathological procedures, and images the samples rapidly within a few minutes. In addition to that, the digitalized images can be shared remotely with the histopathologist in real time.

The adaption of the size of CytoMatrix^{™} from presently commercially available block sizes of 0.8 cm x 0.8 cm to the sizes mentioned herein allows to load more biopsies samples on the same CytoMatrix^{™} and therefore enables the imaging of several biopsies in just one imaging session. Since the biopsy-specialist or surgeon usually takes several biopsies in one session, choosing a larger size decreases the overall microscopy imaging time in favor of a faster diagnosis.

In an embodiment the chitosan-based porous material used in step (i) of the method according to the invention is used in a lattice box, open on the top, having at least one compartment which is adapted to the desired size of the slab or block. The use of the chitosan based-porous material in such a box is advantageous to facilitate the handling of the often elastic chitosan-based porous material.

In an embodiment the sample prepared according to anyone of the preceding embodiments is mounted on a specimen or sample holder to be used in microscopy for the examination of the biopsy samples, which represents step (v) of the method according to the invention.

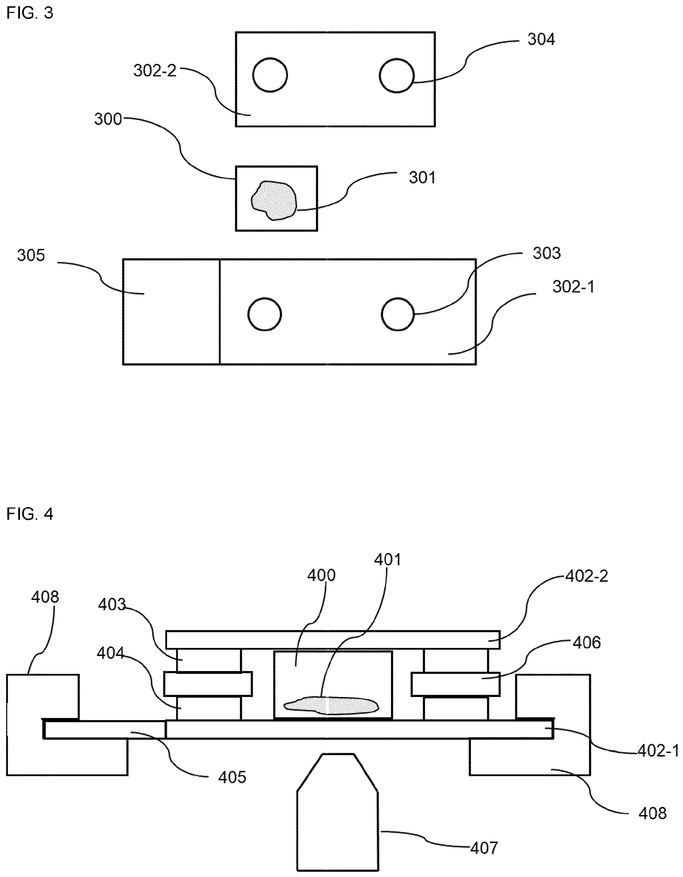

Suitable specimen holders include holders wherein the sample is sandwiched between a first plate, comprising a window through which an optical beam passes, and a second plate. To fasten the first and the second plate, the plates may contain magnetic means so that the first and the second plate are magnetically attracted. Such specimen holders are known and described in DE 10 2019 101 035 A1. It is important for the accuracy of the microscopic evaluation that the sample is securely fastened on a microscopic sample holder during the acquisition of microscopic data of the optical image sections. Otherwise, if the microscopic sample starts moving during the data gathering - independently of the microscope stage movements - the scanning of optical image sections is not possible. The inventors found that it is advantageous to use the magnetic sample holder as described in DE 10 2019 101 035 A1, however, modified in that the elastic cushion is omitted and spacers are used. The spacer is mounted between the magnets of the lower and the upper plate without or only partially modulating the magnetic attraction between the magnets of the lower and the upper plate. The use of the spacer is necessary as the magnetic pressure can compress and damage the microscopic sample. Such a specimen holder is exemplified in Fig. 3 and Fig. 4

Therefore, the invention is also directed to the preparation of a sample for microscopic examination as described herein, particularly according to above mentioned embodiments, using a magnetic specimen holder as shown in Fig. 3 and Fig. 4 comprising spacers mounted between the magnetic closures of the upper and the lower plate of the specimen holder. The invention is also directed to the magnetic sample holder as described herein.

In addition to above mentioned advantage, the mounting of the microscopic sample on the inventive magnetic holder ensures the flatness of the imaging surface as well as its correct localization within the focal distance of the microscope objective. This is crucial to enable the focal image acquisition, i.e. optical image sectioning, of the biopsy samples and thus the diagnosis.

The material of the spacer may be an inorganic or organic, natural or synthetic elastomer, plastomer or any type of claydough or playdough.

The invention is further directed to a sample prepared by the methods according to the invention.

Moreover, the invention is directed to the use of the sample prepared by the method according to the invention for the immediate (instantaneous) examination of the biopsy samples after collection. Immediate means that the freshly taken biopsy sample can be imaged after taking the biopsy without performing a long fixation step using formalin for at least 6 hours. The time frame for biopsy samples to be considered "fresh" is usually in the range of directly after the biopsy until a point in time when the sample starts to degrade without the application of preservation methods to the sample.

The inventors found that step (iii), namely the addition of ethanol in water or an aqueous buffer enhances the penetration of the fluorescent dye into the biopsy sample and it is believed that it also partially fix the biopsy into the chitosan-based porous material. Suitable buffer solutions are those which have stabilizing effects on the cells contained in the biopsy sample. The skilled person knows how to choose the appropriate buffer solutions in view of the biopsy sample to be examined.

The inventors found that in this respect, ethanol is particularly suitable, particularly if used in a concentration of 65% (v/v) to 75% (v/v), as it provides good permeabilization effect without damaging the cellular morphology of the biopsy sample. The use of 70% (v/v) ethanol is particularly advantageous.

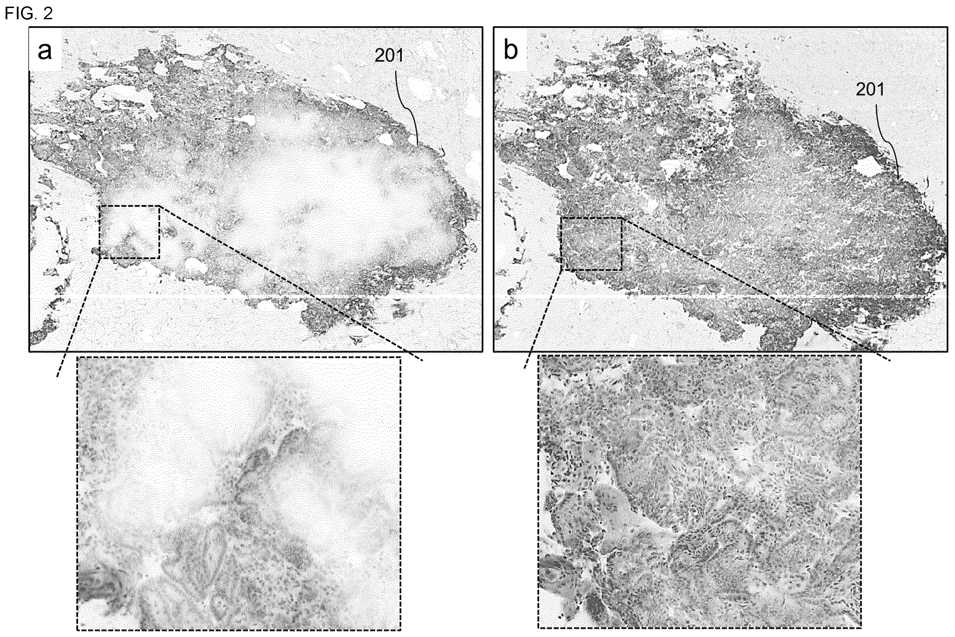

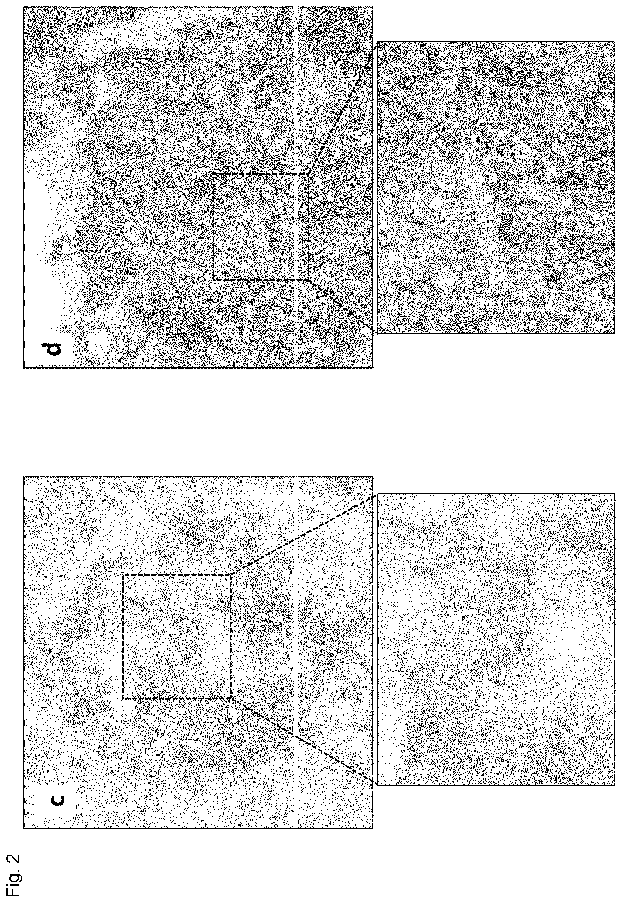

The alcohol is used in an appropriate amount which can be in the range from 50 µL to 2 mL. This basically depends on the size of the chitosan-based porous material used, and the amount of biopsy sample. When a microscope of the type VivaScope^{™} 2500 is used for the microscopic evaluation, then 50 µL to 500 µL, depending on the amount of biopsies to be examined, is appropriate. The alcohol enhances the permeabilization of the biopsy samples and therefore, during the staining, causes the quick and efficient penetration of the fluorescent dye into the biopsy, often within only a few seconds and facilitates homogeneous staining across the entire biopsy sample. Thus the alcohol treatment ensures the homogenous staining of the biopsy sample that is necessary for the evaluation/diagnosis. Without the above-described effects (e.g. the alcohol-enabled penetration of the fluorescent dye into the biopsy), some of the detailed cellular morphology which is necessary for an accurate biopsy evaluation cannot be visualized in the resulting images. The beneficial effect of the addition of alcohol is exemplified in Figs. 2a/2b and Figs. 2c/2d.

The amount of dye to be added in step (iv) depends on the type of dye and of the biopsy sample, particularly of the type of biological material to be examined, and can be found by a skilled person through standard experimentation, or is described by the manufacturer of the dye. After the addition of the dye alone or as a combination of dyes and after a short incubation period, the excess of dye is removed by rinsing the sample with an appropriate, preferably aqueous and buffered, solution.

In step (iv) of the method according to the invention every suitable dye can be used which is able to visualize cells and/or tissue and used with microscopic examination methods. Preferably used are fluorescent dyes alone or in combination with other (fluorescent) dyes. Fluorescent dyes are preferred. The dye(s) can interact directly with the cells and/or tissues of the sample or indirectly via linker molecules capable of binding cells and/or tissues, such as e.g. antibodies and lectins.

The following dyes commonly used for dying/staining biopsy samples can be mentioned as an example for suitable dyes:
- 2,3-Benzoquinolie-type dyes, such as Acridine Orange, Acriflavine, Proflavine and Acridine Yellow and their derivatives.
- Thiazin-type dyes, such as Toluidine Blue and Methylene Blue and their derivatives.
- The colors of Masson trichrome stains, Methyl Blue, Aniline Blue, Fast Green FCF, Water Blue, Hematoxylin and Eosin and their derivatives.
- Ethidium Bromide, Rhodamine123, Syber Green, Acid Fusion, Sirius Red, Col-F, Nile Blue, Nile Red, Oil Red O, Auramine O, Neutral Red, Patent Blue, Fluorescein, Indocyanine green (ICG), Methyl Green, Pyronin Y and their derivatives.

They can be used alone or as mixture of at least two dyes.

As mentioned above, suitable chitosan-based porous material is prepared according to the methods described in WO 2018/083619 A1 to receive the material having interconnected pores with sizes between 5 µm and 700 µm and a total porosity (volumetric fraction) between 40% and 90%. For the determination of pore sizes scanning electron microscopes (SEM) can be used. The same applies to the determination of the total porosity. The material is obtainable by arranging a chitosan and/or a lactosylated chitosan solution or a vinyl derivative solution of chitosan, said vinyl derivative being alone or in mixture with a sulfhydryl derivative of chitosan, all compounds having a molecular weight between 50 kDa and 200 kDa and being dissolved in an acid solution of polar inorganic or organic acid, followed by a gelification of said solution to obtain a hydrogel and freeze-drying the resulting hydrogel obtaining the porous material.

The chitosan-based porous material shapes the biopsy samples into an integrity, that can be handled, and the use of the material preserves the biopsy samples from being lost or damaged during the further processing, namely staining, and imaging. And after that, the storage of the sample and, if desired, further pathological analysis can be performed, such as immunostaining or DNA analysis.

Biopsy samples are biological samples containing tissue and/or eukaryotic and/or prokaryotic cells and/or eukaryotic cells containing viral particles. The samples can be obtained from cell-containing bodily fluids such as blood, urine, sputum, effusion, lavage, saliva and other aqueous humor, or by performing a biopsy such as incisional biopsy, cervical cytology biopsies, shave biopsy, brush biopsy (e.g. skin cytological samples), swab biopsy, stereotactic biopsy, sternal biopsy, chorionic villus biopsy, cone biopsy, endoscopic biopsy, adhesive patch-based biopsy, as well as from needle biopsies (percutaneous biopsies) such as fine-needle aspiration biopsy (FNA), fine-needle biopsy (FNB), small-needle biopsy, micro core-needle biopsy and core-needle biopsy. Biopsy samples obtained through needle biopsies, such as fine-needle aspiration biopsy, small-needle biopsy, fine-needle biopsy, and micro core-needle biopsies, particularly through FNA and FNB are preferably used in the method according to the invention.

FNA and FNB are known biopsy methods (cf. DOOLEY, William C. Biopsy Techniques in Non-palpable or Palpable Breast Lesions. In: Breast Disease. Springer, Cham, 2016. S. 3-11, or TIAN, Li, et al. Evaluation of 22G fine-needle aspiration (FNA) versus fine-needle biopsy (FNB) for endoscopic ultrasound-guided sampling of pancreatic lesions: a prospective comparison study. Surgical endoscopy, 2018, 32. Jg., Nr. 8, S. 3533-3539.).

While the biopsy samples, which are obtained via needle biopsy and brush biopsy can be directly placed on the chitosan-based porous material, it is often advantageous to concentrate the cells of the bodily fluids before adding to the porous material. The concentration of the sample is preferably done by centrifugation. The resulting cell-containing pellet can be resuspended in an appropriate amount of a suitable solution, which is preferably a cell-protecting buffer-solution. Also, the collected biological material obtained from adhesive patch-based biopsy or brush biopsy needs to be pretreated before being added on the chitosan-based porous material in that the cells are removed from the patch or brush, for example by using a cell-protecting buffer solution. The cells in the resulting sample solution can be concentrated with centrifugation and loaded on the chitosan-based porous material as described before.

The biopsy samples, particularly those obtained from fine-needle aspiration biopsy, small-needle biopsy, fine-needle biopsy, and micro core-needle biopsies are often fragile, flimsy and lack integrity. They cannot be appropriately handled according to standard cytological sample preparation procedures. The handling often results in a at least partial loss of sample and, worse, in the damage of the cells. The result of the examination can therefore be incomplete and at least partially incorrect and thus misguiding.

After performing the methods according to the invention, the sample, containing the chitosan-based material and the biopsy sample, can be preserved and treated according to standard histological sample preparations, e.g. as described in WO 2018/083616 A1.

All available microscopes can be used for the examination of the samples prepared by the methods according to the invention, preferred are the microscopes which are able to produce optical image sections as explained above. Preferably laser-scanning confocal microscopes are used. Such microscopes are for example those of the VivaScope^{™} series sold by MAVIG GmbH (Germany) or the HistologScanner^{™} sold by Saman Tree Medical SA (Switzerland).

Other microscopes which are able to produce optical image sections are also suitable, such microscopes are for example:
- multi-photon fluorescence microscopes,
- two-photon or three-photon fluorescence microscopes, such as the FD1070, sold by Femti Diagnostics B.V. (The Netherlands),
- optical coherence tomography, such as sold by Perimeter Medical Imaging, Toronto (Canada),
- full-field optical coherence tomography, such as the Light-CT Scanner from LLTech.,
- microscopy with ultraviolet sectioning excitation, such as sold by Muse Microscopy Inc. Irvine, CA (USA),
- high and ultra-high resolution subsurface imaging,
- stimulated Raman scattering,
- stimulated Raman histology, such as the sold by InVeniolmaging Inc., Santa Clara, CA (USA),
- multiple-harmonic generation microscopy, second harmonic generation (SHG) or third harmonic generation (THG).

The invention is exemplified in the drawings and the experiments which are described in more detail below, without restricting or limiting the application to the drawings or examples.

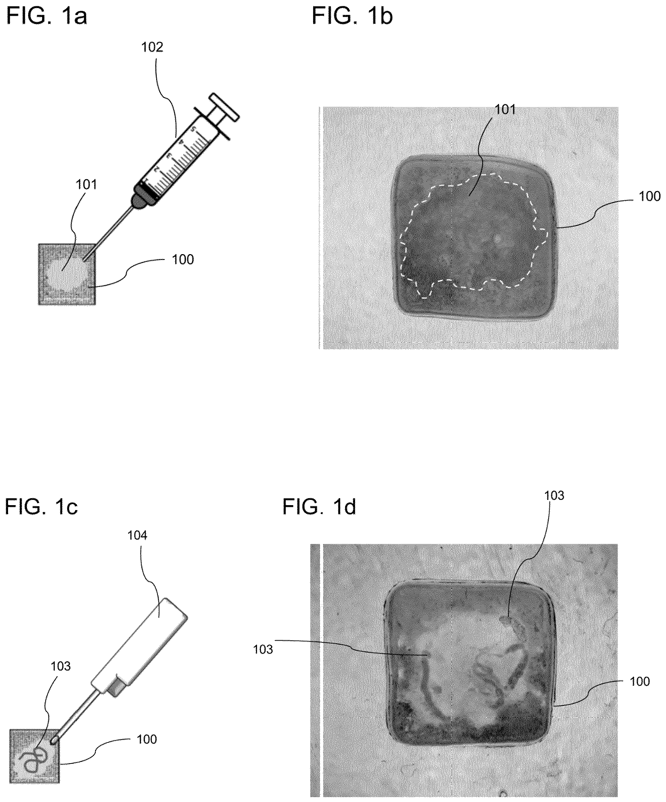

Fig. 1a shows the loading of a fine needle aspiration biopsy 101 on a chitosan-based material 100 with a syringe used for FNA.
Fig. 1b is a picture in a plan view of a FNA biopsy 101 on a chitosan-based material 100 after alcohol treatment and staining with Acridine Orange before image acquisition. The picture is modified by inverting the colors. The dotted line characterizes the boundaries of the loaded biopsy.
Fig. 1c shows the loading of a fine needle biopsy 103 having a tubular shape/structure on a chitosan-based material 100.
Fig. 1d is a picture in a plan view of a fine needle biopsy 101 on a chitosan-based material 100 after alcohol treatment and staining with Acridine Orange before image acquisition. The picture is modified by inverting the colors. The tubular fragments of tissue from FNB are fragile. The chitosan material supports the FNB structure and protects it from damages or lost.
Fig. 2a, upper picture shows a microscope image of a FNA biopsy mounted on a chitosan-based material stained with Acridine Orange, however, without alcohol treatment. The lower picture is the enlargement and the higher magnification of the indicated section in the rectangle. The morphology of the sample is hardly identifiable.
Fig. 2b, upper picture shows a microscope image of the same FNA biopsy as shown in Fig. 2a on a chitosan-based material, which is stained again and which was treated with alcohol before re-staining. The lower picture is the enlargement and the higher magnification of the indicated section in the rectangle. The morphology of the sample is now identifiable, and the details of the morphology is necessary for the proper evaluation /diagnosis of the biopsy.
Fig. 2c, upper picture shows a microscopic image of the first halve portion of a FNA biopsy (divided into 2 halves) mounted on a chitosan-based material and stained with Acridine Orange without the addition of alcohol. The lower picture is the enlargement and the higher magnification of the indicated section in the rectangle. The morphology of the sample is hardly identifiable.
Fig. 2d, upper picture shows a microscope image of the second halve portion of the same FNA biopsy as used for the preparation of the sample shown in Fig. 2c, mounted on a chitosan-based material, treated with alcohol, and then stained with Acridine Orange. The lower picture is the enlargement and the higher magnification of the indicated section in the rectangle. The morphology of the sample is now identifiable, and the details of the morphology is necessary for the proper evaluation /diagnosis of the biopsy.
Fig. 3 shows the plan view of a magnetic specimen holder comprising a base plate 302-1 having counter magnetic elements 304 and a supporting plate 302-2 having magnetic elements 303. The microscopic sample is shown as rectangular shaped chitosan-based material 300 on which a biopsy sample is loaded. The chitosan-based material may have a dent to receive the biopsy sample.
Fig. 4 shows schematically a side elevation of a magnetic sample holder consisting of a base plate 402-1 and a supporting plate 402-2. The magnetic elements 403 and the counter magnetic elements 404 protrude from the base plate 402-1 and the supporting plate 402-2, respectively. A spacer 406 made from an elastic material is between the magnetic elements and counter magnetic elements on both sides of the plates and thus fixing the chitosan-based material 400 on which the biopsy sample 401 is loaded. The spacer 306 modulates the magnetic force of the magnetic elements 403 and 404 in order to protect the chitosan-biopsy sample 400, 401 against compression. The chitosan material 400 and the biopsy sample 401 are placed upside-up on the supporting plate 402-2. The base plate 402-1 comprises a grip or handle section 405 which may be coated with white paint and which can be used for writing notes on it or as a handle of the sample holder.
Fig. 4 additionally shows how the chitosan-biopsy sample 400, 401 with the sample holder is mounted on a microscope stage 408, similar to a microscope stage of the type VivaScope^{™} 2500 microscope. The objective 407 of the microscope that images the chitosan-biopsy sample 400, 401 through the base plate 402-1. The plates keep the chitosan-biopsy sample motionless during the imaging with microscope objective and provide a flat surface for optical image sectioning.
Fig. 5a shows a schematic view of a lattice box 501 which comprises four compartments, each of which can receive one slab of the material. The lattice box is a commercially available biopsy processing or embedding cassette.
Fig. 5b shows the lattice box 501 containing the chitosan-based porous material in form of a slab 500.

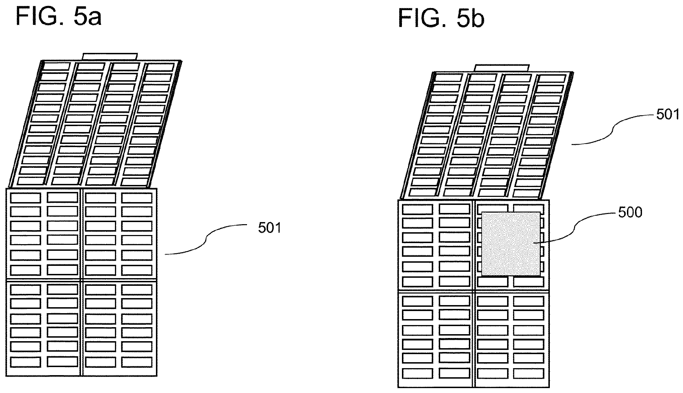

If not mentioned otherwise the following apparatus, materials and chemicals are used:
The chitosan-based porous material used is CytoMatrix^{™} manufactured by UCS Diagnostic Srl.. The CytoMatrix^{™} is used as a cell block having a size of about 1.2 cm x 1.2 cm (length x breadth) and a height of about 0.2 cm. For the sample preparation, CytoMatrix TM is put into a biopsy processing or embedding cassette as shown in Fig. 5. Such cassettes are known and can be purchased under the brands Swingsette^{™}, Slimsette^{™} or Unisette^{™}.

PBS-buffer: Phosphate-buffered saline is prepared as followed: Add 8 g NaCl, 0.2 g KCl, 1.44 g Na₂HPO₄ and 0.24 g KH₂PO₄ to 800 mL of distilled water. After mixing the pH is adjusted with HCl to pH 7.4. Further dilute the mixture with distilled water to a final volume of 1 liter.

For staining Acridine Orange is used (CAS No. 494-38-2).

The VivaScope^{™} 2500 confocal microscope from MAVIG GmbH is used for the examination.

### A: Examination of bodily fluids such as effusions, urine, sputum and other cell suspensions

The biopsy material consisting of a cell suspension sample is centrifuged at a force in the range of from 50 to 1500 RCF (Relative Centrifugal Forces also known as "g") for 5 to10 minutes. The time and centrifugation force depend on different parameters e.g. the cell type density and the viscosity of the solution and is adapted to the biopsy sample following know procedures.

The resulting cell pellet is collected, and the supernatant is discarded. The cell pellet is resuspended and fixed in a fixative solution for 30 seconds with a 1:1 ratio of the pellet volume to the fixative solution volume. The fixative solution comprises a 1:1 ratio of absolute ethanol to buffered formalin. The fixation is needed to keep the cell-shape intact.

The suspension is centrifuged in the range of 50 to 1500 RCF for 10 minutes. The pellet is collected, and the supernatant discarded.

50 µL to 100 µL material from the cell pellet is loaded on the CytoMatrix^{™}, 2-3 droplets (about 150 µl) of 70% ethanol in PBS-buffer are added on the loaded material and the mixture is incubated for about 10 seconds. After that, 2-3 droplets (about 150 µl) of Acridine Orange are added to the same spot. After another 20 seconds, which is the incubation time for staining the sample, the microscopic sample is rinsed with PBS-buffer to remove excess dye.

The sample is mounted into a specimen holder and examined with a microscope which is able to produce optical image sections. Evaluation of the images is done by software or a person.

### B: Using fresh biopsy samples-sample preparation

After loading fresh biopsy samples on the CytoMatrix^{™}, 2-3 droplets (about 150 µl) of 70% ethanol in PBS-buffer are added on the loaded material and the mixture is incubated for about 10 seconds. After that, 2-3 droplets (about 150 µl) of Acridine Orange are added to the same spot. After another 20 seconds, which is the incubation time for staining the sample, the microscopic sample is rinsed with PBS-buffer to remove excess dye.

The loading of a fine needle aspiration biopsy on CytoMatrix^{™} is schematically shown in Fig. 1a and a plan view picture of the sample for microscopic evaluation after alcohol treatment and staining is shown in Fig. 1b.

The loading of a fine needle biopsy (FNB) is schematically shown in Fig. 1c and a plan view picture of the sample for microscopic evaluation after alcohol treatment and staining is shown in Fig. 1d.

The sample is mounted into a specimen holder and examined with a microscope which is able to produce optical image sections. Evaluation of the images is done by software or a person.

### C: Microscopic examination using confocal microscopy

The sample is mounted on a specimen holder as shown in Fig. 4 by fixing the sample between two glass slides (402-1 and 402-2) which contain magnetic fastening means (403 and 404). The slides are magnetically attracted to each other and thus keeping the sample (400 and 401) securely fixed between the slides. To avoid damage to the sample, a ductile material, here commercially available Play-Doh, manufactured by Hasbro, is put between the magnets to increase the space between the slides and to ease the pressure on the sample, which originates from the magnetic attraction.

The sample is imaged with the VivaScope^{™} 2500 microscope within a few minutes. The microscope provides digitalized images as optical sections to be evaluated by a software or a person.

### D: Comparison examples

### D.1: Two measurements are performed on the same fine needle aspiration biopsy sample with and without addition of alcohol.

Sample 1 (comparison) is prepared by loading the biopsy on CytoMatrix^{™}, followed by staining with Acridine Orange, and rinsing with PBS-buffer according to the protocol given under item B, however, without the addition of 70% ethanol in PBS-buffer.

Sample 2 is prepared by using sample 1 after measurement by adding 70% ethanol in PBS-buffer, followed by staining with Acridine Orange and rinsing with buffer following the protocol as given under item B.

The rinsing with PBS-buffer shall remove excess stain from the sample.

Both samples are microscoped with a VivaScope^{™} 2500 confocal microscope from MAVIG GmbH and the results are shown in Fig. 2a (sample 1) and Fig. 2b (sample 2). It can be clearly seen that the microscopic morphology is more pronounced in sample 2, which is prepared according to the invention. Details of microscopic morphology is necessary for a proper evaluation / diagnosis.

### D.2: Two measurements are performed on a fine needle aspiration biopsy sample divided into two portions, either with or without the addition of alcohol.

Sample 3 (comparison) is prepared by loading one portion of a fine needle aspiration biopsy on CytoMatrix^{™}, followed by staining with Acridine Orange, and rinsing with PBS-buffer according to the protocol given under item B, however, without the addition of 70% ethanol in PBS-buffer.

Sample 4 is prepared by using the other portion of the fine needle biopsy sample used in the sample preparation of sample 3, by adding 70% ethanol in PBS-buffer, followed by staining with Acridine Orange and rinsing with buffer following the protocol as given under item B.

Both samples are microscoped with a VivaScope^{™} 2500 confocal microscope from MAVIG GmbH and the results are shown in Fig. 2c (sample 3) and Fig. 2d (sample 4). It can be clearly seen that the microscopic morphology is more pronounced in sample 4, which is prepared according to the invention.

### List of reference signes:

100 = Chitosan-based material
101 = Fine needle aspiration (FNA) biopsy sample
102 = Syringe for fine needle aspiration biopsy
103 = Biopsy sample having a tubular structure as taken with fine needle biopsies (FNB)
104 = Syringe for core biopsies, preferably for fine needle biopsies
201 = Fine needle aspiration (FNA) biopsy sample loaded on CytoMatrix^{™}
300 = Chitosan-based material
301 = Biopsy sample
302-1 = Base plate comprising counter magnetic elements 304
302-2 = Supporting plate comprising magnetic elements 303
303 = Magnetic elements
304 = Counter magnetic elements
305 = Grip or handle section
400 = Chitosan-based material
401 = Biopsy sample
402-1 = Base plate
402-2 = Supporting plate
403 = Magnetic elements
404 = Counter magnetic elements
405 = Grip or handle section
406 = Spacer
407 = Objective from the microscope
408 = Sample holder on the microscope stage
500 = Chitosan-based porous material in form of a slab
501 = Lattice box

## Claims

1. Method for preparing a sample for microscopic examination comprising the following steps:
step (i): using a solid or ductile chitosan-based porous material having interconnected pores with sizes between 5 µm and 700 µm and a total porosity (volumetric fraction) between 40% and 90%;
step (ii): adding at least one biopsy sample containing tissue and/or eukaryotic and/or prokaryotic cells and/or eukaryotic cells containing viral particles to the chitosan-based porous material; and
step (iii): adding ethanol and in a concentration of 65% [v/v] to 75% [v/v] in water or aqueous buffer.

2. The method according to claim 1, wherein the chitosan-based porous material is obtained by arranging a chitosan and/or a lactosylated chitosan solution or a vinyl derivative solution of chitosan, said vinyl derivative being alone or in mixture with a sulfhydryl derivative of chitosan, all compounds having a molecular weight between 50 kDa and 200 kDa and being dissolved in an acid solution of polar inorganic or organic acid, followed by a gelification of said solution to obtain a hydrogel and freeze-drying the resulting hydrogel obtaining the porous material.

3. The method according to claim 1 or 2, wherein ethanol is used in a concentration of 70% [v/v] in water or aqueous buffer.

4. The method according to any one of the preceding claims, additionally comprising a step (iv), namely staining the biopsy sample by adding at least one fluorescent dye.

5. The method according to claim 4 using 2,3-Benzoquinoline-type dyes, Acridine Orange, Acriflavine, Proflavine and Acridine Yellow, Thiazine-type dyes, Toluidine Blue and Methylene Blue, the colors of Masson trichrome stains, Methyl Blue, Aniline Blue, Fast Green FCF, Water Blue, Hematoxylin, Eosin, Ethidium Bromide, Rhodamine123, Syber Green, Acid Fusion, Sirius Red, Col-F, Nile Blue, Nile Red, Oil Red O, Auramine O, Neutral Red, Patent Blue, Fluorescein, Indocyanine green (ICG), Methyl Green, Pyronin Y, and combinations thereof, which dyes may bind directly or via linkers such as antibodies or lectines.

6. The method according to any one of claims 1 to 5, wherein the chitosan-based porous material is used in the shape of a slab or a block, wherein at least one surface of the slab or the block is capable of receiving the biopsy sample in its entirety as collected through incisional biopsy, stereotactic biopsy, sternal biopsy, chorionic villus biopsy, cone biopsy, endoscopic biopsy, needle biopsy (percutaneous biopsies), fine-needle aspiration biopsy (FNA), fine-needle biopsy (FNB), small-needle biopsy, micro-needle biopsy, core-needle biopsy or cell suspension biopsies.

7. The method according to claim 6, wherein the length and/or the breadth, or the diameter of the at least one surface, which is capable of receiving the biopsy sample, is 1.5 cm or smaller.

8. The method according to claim 6 or 7, additionally comprising a step (v), namely mounting the sample on a specimen holder to be used in microscopy.

9. The method according to claim 8, wherein the sample is sandwiched between a first plate 302-1, 402-1 comprising a window through which an optical beam passes, and a second plate 302-2, 402-2.

10. The method according to claim 9, wherein the first plate 402-1 and the second plate 402-2 comprise magnetic elements 403 and 404 and spacers 406 mounted between the magnetic closures of the upper and the lower plate of the specimen holder so that the sample is securely fixed between the plates and without damaging the biopsy sample.

11. The method according to any one of the preceding claims using fresh histopathological biopsy samples in step (ii).

12. The method according to claim 11, wherein the histopathological samples are collected using at least one of the following biopsy methods: incisional biopsy, shave biopsy, brush biopsy, swab biopsy, stereotactic biopsy, sternal biopsy, chorionic villus biopsy, cone biopsy, endoscopic biopsy, adhesive patch-based biopsy, needle biopsies (percutaneous biopsies), fine-needle aspiration biopsy (FNA), fine-needle biopsy (FNB), small core-needle biopsy, micro core-needle biopsy and core-needle biopsies.

13. Sample prepared according to the methods, described in any one of the preceding claims.

14. Use of the sample prepared by the methods according to any one of the preceding claims for instantaneous examination using optical image sections of the biopsy samples after collection.

15. Use of the sample prepared by a method according to any one of claims 1 to 13 for laser-scanning confocal microscopy, multi-photon fluorescence microscopy, two-photon fluorescence, three-photon fluorescence, optical coherence tomography and full-field optical coherence tomography, microscopy with ultraviolet sectioning excitation, high and ultra-high resolution subsurface imaging, stimulated Raman scattering, stimulated Raman histology, multiple-harmonic generation microscopy, second harmonic generation (SHG) or third harmonic generation (THG).

## Patentansprüche

1. Verfahren zur Herstellung einer Probe für die mikroskopische Untersuchung, umfassend die folgenden Schritte:
Schritt (i): Verwendung eines festen oder duktilen porösen auf Chitosan basierenden Materials das miteinander verbundenen Poren mit einer Größe zwischen 5 µm und 700 µm aufweist und eine Gesamtporosität (Volumenanteil) zwischen 40 % und 90 % besitzt;
Schritt (ii): Hinzufügen mindestens einer Biopsieprobe, die Gewebe und/oder eukaryotische und/oder prokaryotische Zellen und/oder eukaryotische Zellen, die Viruspartikel enthalten, enthält, zu dem porösen auf Chitosan basierenden Material; und
Schritt (iii): Hinzufügen von Ethanol in einer Konzentration von 65 % [v/v] bis 75 % [v/v] in Wasser oder einem wässrigen Puffer.

2. Verfahren nach Anspruch 1, wobei das poröse auf Chitosan basierende Material erhalten wird, durch Vorlegen einer Chitosan- und/oder einer lactosylierte Chitosanlösung oder einer Vinyl-Derivatlösung von Chitosan, wobei das Vinyl-Derivat allein oder in Mischung mit einem Sulfhydryl-Derivat von Chitosan vorliegt, wobei alle Verbindungen ein Molekulargewicht zwischen 50 kDa und 200 kDa aufweisen und in einer Säurelösung aus polarer anorganischer oder organischer Säure gelöst sind, gefolgt von einer Gelierung dieser Lösung, um ein Hydrogel zu erhalten, und Gefriertrocknen des resultierenden Hydrogels, um das poröse Material zu erhalten.

3. Verfahren nach Anspruch 1 oder 2, wobei Ethanol in einer Konzentration von 70 % [v/v] in Wasser oder wässrigem Puffer verwendet wird.

4. Verfahren nach einem der vorstehenden Ansprüche, das zusätzlich einen Schritt (iv) umfasst, nämlich das Färben der Biopsieprobe durch Zugabe mindestens eines Fluoreszenzfarbstoffs.

5. Verfahren nach Anspruch 4 unter Verwendung von Farbstoffen vom 2,3-Benzochinolin-Typ, Acridinorange, Acriflavin, Proflavin und Acridingelb, Farbstoffen vom Thiazin-Typ, Toluidinblau und Methylenblau, den Farben der Masson-Trichrom-Färbung, Methylblau, Anilinblau, Fast Green FCF, Wasserblau, Hämatoxylin, Eosin, Ethidiumbromid, Rhodamin 123, Syber Green, Acid Fusion, Sirius Red, Col-F, Nilblau, Nilrot, Ölrot O, Auramin O, Neutralrot, Patentblau, Fluorescein, Indocyaningrün (ICG), Methylgrün, Pyronin Y und Kombinationen davon, wobei diese Farbstoffe direkt oder über Linker wie Antikörper oder Lektine binden können.

6. Verfahren nach einem der Ansprüche 1 bis 5, wobei das poröse auf Chitosan basierende Material in Form einer Platte oder eines Blocks verwendet wird, wobei mindestens eine Oberfläche der Platte oder des Blocks in der Lage ist, die Biopsieprobe in ihrer Gesamtheit aufzunehmen, wie sie mittels Inzisionsbiopsie, stereotaktischer Biopsie, Sternumbiopsie, Chorionzottenbiopsie, Konusbiopsie, endoskopischer Biopsie, Nadelbiopsie (perkutaner Biopsie), Feinnadelaspirationsbiopsie (FNA), Feinnadelbiopsie (FNB), Klein-Nadelbiopsie, Mikronadelbiopsie, Kernnadelbiopsie oder Zellsuspensionsbiopsien gewonnen wird..

7. Verfahren nach Anspruch 6, wobei die Länge und/oder die Breite oder der Durchmesser der mindestens einen Oberfläche, die zur Aufnahme der Biopsieprobe geeignet ist, 1,5 cm oder weniger beträgt.

8. Verfahren nach Anspruch 6 oder 7, das zusätzlich einen Schritt (v) umfasst, nämlich das Anbringen der Probe auf einem Probenhalter zur Verwendung in der Mikroskopie.

9. Verfahren nach Anspruch 8, wobei die Probe zwischen einer ersten Platte 302-1, 402-1, die ein Fenster aufweist, durch das ein optischer Strahl hindurchtritt, und einer zweiten Platte 302-2, 402-2 angeordnet ist.

10. Verfahren nach Anspruch 9, wobei die erste Platte 402-1 und die zweite Platte 402-2 magnetische Elemente 403 und 404 und Abstandshalter 406 umfassen, die zwischen den magnetischen Verschlüssen der oberen und der unteren Platte des Probenhalters angebracht sind, so dass die Probe sicher zwischen den Platten fixiert ist, ohne die Biopsieprobe zu beschädigen.

11. Verfahren nach einem der vorstehenden Ansprüche, bei dem in Schritt (ii) frische histopathologische Biopsieproben verwendet werden.

12. Verfahren nach Anspruch 11, wobei die histopathologischen Proben unter Verwendung mindestens eines der folgenden Biopsieverfahren entnommen werden: Inzisionsbiopsie, Shave-Biopsie, Bürstenbiopsie, Tupferbiopsie, stereotaktische Biopsie, Sternumbiopsie, Chorionzottenbiopsie, Konusbiopsie, endoskopische Biopsie, Biopsie mit Klebepflaster, Nadelbiopsien (perkutane Biopsien), Feinnadelaspirationsbiopsie (FNA), Feinnadelbiopsie (FNB), kleine Kernnadelbiopsie, Mikro-Kernnadelbiopsie und Kernnadelbiopsien.

13. Probe, die gemäß den in einem der vorstehenden Ansprüche beschriebenen Verfahren vorbereitet wurde.

14. Verwendung der nach einem der vorstehenden Ansprüche hergestellten Probe zur sofortigen Untersuchung unter Verwendung optischer Schnitte von Bildern der Biopsieproben nach der Entnahme.

15. Verwendung der nach einem Verfahren gemäß einem der Ansprüche 1 bis 13 hergestellten Probe für die Laser-Scanning-Konfokalmikroskopie, die Mehrphotonen-Fluoreszenzmikroskopie, die Zwei-Photonen-Fluoreszenz, die Drei-Photonen-Fluoreszenz, die optische Kohärenztomographie und die Vollfeld-Optische Kohärenztomographie, Mikroskopie mit ultravioletter Schnittanregung, hoch- und ultrahochauflösende Unteroberflächenbildgebung, stimulierte Raman-Streuung, stimulierte Raman-Histologie, Mehrfachharmonische-Generations-Mikroskopie, zweite harmonische Generation (SHG) oder dritte harmonische Generation (THG).

## Revendications

1. Procédé de préparation d'un échantillon pour examen microscopique comprenant les étapes suivantes :
étape (i) : utiliser un matériau poreux solide ou ductile à base de chitosane ayant des pores interconnectés d'une taille comprise entre 5 µm et 700 µm et une porosité totale (fraction volumétrique) comprise entre 40 % et 90 % ;
étape (ii) : ajouter au matériau poreux à base de chitosane au moins un échantillon de biopsie contenant des tissus et/ou des cellules eucaryotes et/ou procaryotes et/ou des cellules eucaryotes contenant des particules; et
étape (iii) : ajouter de l'éthanol à une concentration comprise entre 65 % [v/v] et 75 % [v/v] dans de l'eau ou un tampon aqueux.

2. Procédé selon la revendication 1, dans lequel le matériau poreux à base de chitosane est obtenu en disposant une solution de chitosane et/ou de chitosane lactosylé ou une solution de dérivé vinylique du chitosane, ledit dérivé vinylique étant seul ou en mélange avec un dérivé sulfhydryle du chitosane, tous les composés ayant un poids moléculaire compris entre 50 kDa et 200 kDa et étant dissous dans une solution acide d'un acide inorganique ou organique polaire, suivi d'une gélification de ladite solution afin obtenir un hydrogel et d'une lyophilisation de l'hydrogel obtenu permettant d'obtenir le matériau poreux.

3. Procédé selon la revendication 1 ou 2, dans lequel l'éthanol est utilisé à une concentration de 70 % [v/v] dans de l'eau ou un tampon aqueux.

4. Procédé selon l'une quelconque des revendications précédentes, comprenant en outre une étape (iv), à savoir la coloration de l'échantillon de biopsie par ajout d'au moins un colorant fluorescent.

5. Procédé selon la revendication 4 utilisant des colorants de type 2,3-benzoquinoline, l'acridine orange, l'acriflavine, la proflavine et l'acridine jaune, des colorants de type thiazine, le bleu de toluidine et le bleu de méthylène, les couleurs des colorants trichromes de Masson, le bleu de méthyle, le bleu d'aniline, le vert rapide FCF, le bleu d'eau, l'hématoxyline, l'éosine, le bromure d'éthidium, rhodamine 123, Syber Green, Acid Fusion, rouge Sirius, Col-F, bleu Nile, rouge Nile, Oil Red O, auramine O, rouge neutre, bleu patent, fluorescéine, vert d'indocyanine (ICG), vert de méthyle, pyronine Y, et leurs combinaisons, lesquels colorants peuvent se lier directement ou via des agents de liaison tels que des anticorps ou des lectines.

6. Procédé selon l'une quelconque des revendications 1 à 5, dans lequel le matériau poreux à base de chitosane est utilisé sous la forme d'une plaque ou d'un bloc, dans lequel au moins une surface de ladite plaque ou dudite bloc est capable de recevoir l'échantillon de biopsie dans son intégralité tel que prélevé par biopsie incisionnelle, biopsie stéréotaxique, biopsie sternale, biopsie des villosités choriales, biopsie conique, biopsie endoscopique, biopsie à l'aiguille (biopsies percutanées), biopsie par aspiration à l'aiguille fine (FNA), biopsie à l'aiguille fine (FNB), biopsie à petite l'aiguille, biopsie à micro-l'aiguille, biopsie à l'aiguille à carotte (core-needle biopsy) ou biopsies par suspension cellulaire.

7. Procédé selon la revendication 6, dans lequel la longueur et/ou la largeur, ou le diamètre d'au moins une surface capable de recevoir l'échantillon de biopsie, est de 1,5 cm ou moins.

8. Procédé selon la revendication 6 ou 7, comprenant en outre une étape (v), à savoir le montage de l'échantillon sur un porte-échantillon destiné à être utilisé en microscopie.

9. Procédé selon la revendication 8, dans lequel l'échantillon est pris en sandwich entre une première plaque 302-1, 402-1 comprenant une fenêtre à travers laquelle passe un faisceau optique, et une deuxième plaque 302-2, 402-2.

10. Procédé selon la revendication 9, dans lequel la première plaque 402-1 et la deuxième plaque 402-2 comprennent des éléments magnétiques 403 et 404 et des entretoises 406 montées entre les fermetures magnétiques des plaques supérieure et inférieure du porte-échantillon, de sorte que l'échantillon est solidement fixé entre les plaques sans endommager l'échantillon de biopsie.

11. Procédé selon l'une quelconque des revendications précédentes utilisant des échantillons histopathologiques frais de biopsie à l'étape (ii).

12. Procédé selon la revendication 11, dans lequel les échantillons histopathologiques sont prélevés à l'aide d'au moins l'une des méthodes de biopsie suivantes : biopsie incisionnelle, biopsie par rasage, biopsie par brossage, biopsie par écouvillonnage, biopsie stéréotaxique, biopsie sternale, biopsie des villosités choriales, biopsie conique, biopsie endoscopique, biopsie à l'aide d'un patch adhésif, biopsies à l'aiguille (biopsies percutanées), biopsie par aspiration à l'aiguille fine (FNA), biopsie à l'aiguille fine (FNB), biopsie à petite l'aiguille , biopsie à micro-l'aiguille et biopsie à l'aiguille à carotte (core-needle biopies).

13. Échantillon préparé selon les méthodes décrites dans l'une quelconque des revendications précédentes.

14. Utilisation de l'échantillon préparé selon les méthodes décrites dans l'une quelconque des revendications précédentes pour un examen instantané à l'aide de sections d'images optiques des échantillons de biopsie après prélèvement.

15. Utilisation de l'échantillon préparé selon l'un quelconque des procédés décrits dans les revendications 1 à 13 pour la microscopie confocale à balayage laser, la microscopie à fluorescence multiphotonique, la fluorescence à deux photons, la fluorescence à trois photons, la tomographie par cohérence optique et la tomographie par cohérence optique à champ complet, microscopie avec excitation par sectionnement ultraviolet, imagerie sous-superficielle à haute et ultra-haute résolution, diffusion Raman stimulée, histologie Raman stimulée, microscopie à génération d'harmoniques multiples, génération de seconde harmonique (SHG) ou génération de troisième harmonique (THG).
